# FASCICULE DE BREVET EUROPEEN

(11) **EP 3 914 834 B1**
(45) Date de publication et mention de la délivrance du brevet: **03.07.2024**
(21) Numéro de dépôt: 20700228.8
(22) Date de dépôt: 14.01.2020
(51) Int. Cl.: F16F 1/02, F16F 1/04

(54) **RESSORT DE SUSPENSION COMPORTANT UNE PORTION RAIDE ET UNE PORTION SOUPLE D'EXTRÉMITÉ TRONCONIQUE**
TRAGFEDER MIT EINEM STEIFEN TEIL UND EINEM FLEXIBLEN KEGELSTUMPFFÖRMIGEN ENDTEIL
SUSPENSION SPRING COMPRISING A STIFF PORTION AND A FLEXIBLE FRUSTOCONICAL END PORTION

(30) Priorité: 22.01.2019 FR 1900536
(43) Date de publication de la demande: 01.12.2021
(73) Titulaire: Renault s.a.s, 92100 Boulogne Billancourt (FR)
(72) Inventeur: ROLLET, Remi, 91190 GIF SUR YVETTE (FR)
(74) Mandataire: Renault Group
(86) Numéro de dépôt international: PCT/EP2020/050806
(87) Numéro de publication internationale: WO 2020/151998

(56) Documents cités:
- GB-A- 301 075
- US-A1- 2018 215 224

## Description

### Domaine technique de l'invention

L'invention concerne un ressort de suspension pour un véhicule automobile réalisé par enroulement en hélice d'un fil autour d'un axe d'hélice, le ressort de suspension comportant une première portion d'extrémité, dite portion raide, et une deuxième portion d'extrémité, dite portion souple.

### Arrière-plan technique

La présente invention concerne un ressort de suspension pour un dispositif de suspension d'un véhicule automobile. Le ressort de suspension est généralement associé à un amortisseur qui permet d'atténuer les oscillations de la caisse du véhicule.

De manière connue, les ressorts de suspension travaillent en compression entre un support qui est solidaire de la caisse du véhicule et un support qui est solidaire d'un porte-moyeu d'une roue du véhicule.

Un tel ressort de suspension permet de maintenir les roues en contact avec le sol pour assurer une bonne tenue de route du véhicule. Le ressort de suspension permet aussi de filtrer les chocs susceptibles d'être causés par des aspérités de la route afin de garantir le confort des passagers mais aussi afin de protéger les composants mécaniques contre les dommages susceptibles d'être causés par des chocs trop violents.

Il s'agit d'un ressort de suspension hélicoïdal qui comporte plusieurs spires non jointives. Le ressort de suspension est formé par l'enroulement en hélice d'un fil autour d'un cylindre de révolution dont l'axe principal forme l'axe de l'hélice. En général, le fil présente un profil circulaire de diamètre constant. Ainsi, le ressort de suspension présente sensiblement la même raideur sur toute sa longueur.

Le fil est revêtu d'une couche protectrice, par exemple une couche de peinture, afin de réduire les risques de corrosion du ressort de suspension.

De préférence, les spires du ressort de suspension sont destinées à demeurer non jointives même lorsque la suspension est totalement enfoncée. Si les spires du ressort de suspension devenaient jointives, le ressort de suspension ne pourrait plus remplir ses fonctions.

Cependant, pour certains types de véhicules qui sont destinés à transporter des charges très lourdes, notamment les véhicule utilitaires, il est connu de disposer des ressorts de suspension présentant une première portion raide et une portion souple, la raideur de la portion raide étant supérieure à celle de la portion souple. Ainsi, les deux portions de ressorts agissent comme deux ressorts de raideurs différentes agencés en série entre les deux supports. Cependant, les deux portions souple et raide du ressort de suspension sont réalisées avec un fil commun et continu entre les deux portions.

Un tel ressort de suspension à deux portions de raideurs distinctes permet de garantir une suspension optimale du véhicule dans son état vide aussi bien que dans son état chargé. Ainsi, lorsque le véhicule n'est pas chargé, la portion souple du ressort de suspension présente une raideur adaptée pour filtrer efficacement les chocs lorsque le véhicule est dans son état vide, tandis que la portion raide présente une raideur adaptée pour filtrer les chocs lorsque le véhicule est dans son état chargé.

Lorsque le véhicule est dans son état chargé le ressort de suspension subit un effort de compression qui est susceptible de comprimer totalement les spires de la portion souples. Dans ce cas, les spires de la portion souple deviennent jointives, tandis que les spires de la portion raide demeurent non jointives.

Afin d'éviter que le fil formant les spires de la portion souple ne soit endommagé, il est important d'éviter que les spires ne soient en contact avec un angle susceptible d'endommager le revêtement de protection du fil.

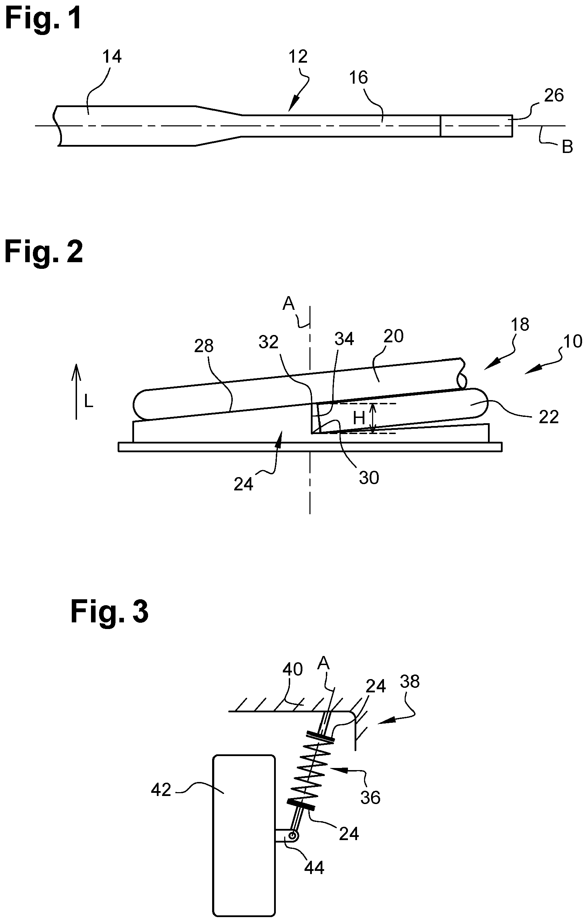

On a représenté à la figure 1 le fil 12 constituant le ressort 10 de suspension. Le fil 12 présente un premier tronçon 14 épais et un deuxième tronçon 16 fin. Le tronçon 16 fin présente un profil circulaire de diamètre inférieur à celui du profil du tronçon 14 épais. Le tronçon 16 fin est destiné à former les spires de la portion 18 souple du ressort 10 de suspension, tandis que le tronçon 14 épais est destiné à former les spires de la portion raide du ressort 10 de suspension.

Comme cela est représenté à la figure 2, la portion 18 souple du ressort 10 de suspension comporte au moins une spire 20 active qui est destinée à être déformée élastiquement. La portion 18 souple du ressort de suspension se termine par une spire 22 d'appui qui est destinée à être appuyée contre un support 24. Lorsque le véhicule est dans son état vide, la spire 22 d'appui n'est pas jointive avec la spire 20 suivante du ressort 10 de suspension.

De manière connue, le tronçon 16 fin du fil 12 présente un profil de dimension constante jusqu'à son extrémité 26 libre.

En outre, la portion 18 souple du ressort de suspension est formée par enroulement en hélice du tronçon 16 fin autour d'un axe "A" longitudinal d'hélice.

Pour éviter que la spire 20 adjacente à la spire 22 d'appui ne soit endommagée par l'extrémité 26 libre du fil 12 lorsque les spires sont jointives, il est connu de conférer au support 24 la forme d'une rampe 28 hélicoïdale qui s'étend en hélice, coaxialement à l'axe "A" d'hélice du ressort 10 de suspension, depuis une extrémité 30 distale jusqu'à une extrémité 32 proximale agencée longitudinalement au droit de l'extrémité 30 distale. Il est ainsi formé une face d'épaulement longitudinale radiale, appelée par la suite "marche 34", qui s'étend sur une distance longitudinale, dite "hauteur de marche H" déterminée séparant l'extrémité 30 distale de l'extrémité 32 proximale.

Pour garantir que la spire 20 adjacente à la spire 22 d'appui ne soit pas en appui sur un angle, il est préférable que la hauteur de marche "H" soit égale au diamètre du profil du tronçon 16 fin du fil 12.

Lorsque la hauteur de marche "H" est supérieure au diamètre du tronçon 18 fin, la marche 34 fait saillie longitudinalement vers le haut par rapport à l'extrémité 26 libre du fil 12. Lorsque la portion 18 souple est totalement comprimée, la spire 20 adjacente est au contact de la spire 22 d'appui sur une distance dépendant de la hauteur de marche "H". Il demeure donc un espace entre la spire 22 d'appui et la spire 20 adjacente. Cet espace est susceptible d'influer sur la raideur totale du ressort 10. En effet, lorsque la portion 18 souple est totalement comprimée, la raideur du ressort 10 devrait être égale à la raideur de la portion raide du ressort. Or, on constate que lorsque la spire 20 adjacente n'est pas totalement en appui sur la spire 22 d'appui, la raideur du ressort est inférieure à la raideur de la portion raide. Le ressort 10 ne peut donc pas agir de manière optimale.

A l'inverse, lorsque la hauteur de marche "H" est inférieure au diamètre du tronçon 18 fin, l'extrémité 26 libre du fil 12 fait saillie longitudinalement vers le haut par rapport à l'extrémité 32 proximale de la rampe 28. Lorsque la portion 18 souple est totalement comprimée, la spire 20 adjacente se retrouve en contact avec l'angle vif formé à l'extrémité 26 libre du fil 12, risquant ainsi d'endommager la couche de protection du fil 12.

Or, il est courant de réaliser des ressorts de suspension dont le fil 12 présente des diamètres variant en fonction du poids, à vide et/ou chargé, du modèle de véhicule. Pour les raisons expliquées précédemment, il n'est pas possible d'agencer le même support 24 de ressort de suspension sur tous les véhicules au risque d'endommager les ressorts de suspension lorsque le diamètre du tronçon 16 fin est supérieur à la hauteur de marche "H", ou au prix d'une efficacité moindre du ressort 10 lorsque le diamètre du tronçon 16 fin est inférieur à la hauteur de marche "H".

Pour garantir la tenue des ressorts 10 de suspension dans le temps, il est donc nécessaire d'ajuster la dimension de la marche 34 en fonction du diamètre du tronçon 16 fin de fil 12 utilisé sur chacun des modèles de véhicule. Cependant, cette solution n'est pas satisfaisante d'un point de vue financier et pratique car elle nécessite de fabriquer et de gérer une grande variété de supports différents. Le document GB 301 075 A montre toutes les caractéristiques du préambule de la revendication 1.

### Résumé de l'invention

L'invention propose un ressort de suspension pour un dispositif de suspension de véhicule automobile réalisé par enroulement en hélice d'un fil autour d'un axe d'hélice, le ressort de suspension comportant :
- une première portion d'extrémité, dite portion raide, qui présente une première raideur déterminée, et qui comporte plusieurs spires actives réalisées avec un premier tronçon, dit tronçon épais, du fil présentant un premier diamètre déterminé ; et
- une deuxième portion d'extrémité, dite portion souple, qui présente une deuxième raideur déterminée inférieure à la première raideur, et qui comporte plusieurs spires actives réalisées avec un deuxième tronçon, dit tronçon fin, du fil présentant un deuxième diamètre déterminé inférieur au premier diamètre déterminé, la portion souple se terminant par une spire d'appui destinée à être appuyée sur un support ;
caractérisé en ce que la spire d'appui de la portion souple est formée en partie par une queue d'extrémité libre du fil présentant une forme tronconique dont le diamètre en section transversal diminue progressivement jusqu'à une extrémité libre présentant un diamètre terminal inférieur au deuxième diamètre.

Selon d'autres caractéristiques du ressort de suspension réalisé selon les enseignements de l'invention :
- la queue présente un axe principal qui est agencé dans le prolongement de l'axe du tronçon fin ;
- la queue tronconique s'étend sur un secteur angulaire inférieur à 270° autour de l'axe d'hélice ;
- la queue tronconique s'étend sur un secteur angulaire compris entre 90° et 180° autour de l'axe d'hélice ;
- le fil comporte un tronçon intermédiaire entre le tronçon épais et le tronçon fin, le tronçon intermédiaire présentant une forme tronconique faisant varier progressivement le diamètre de la section transversale entre le premier diamètre et le deuxième diamètre ;
- au repos, la spire d'appui de la portion souple n'est pas jointive avec la spire adjacente ;
- la partie de fil formant la spire adjacente est revêtue d'une gaine de protection d'une épaisseur déterminée.

L'invention concerne aussi un dispositif de suspension pour un véhicule automobile comportant un ressort de suspension réalisé selon les enseignements de l'invention, qui est monté entre deux supports solidaires respectivement d'une caisse du véhicule, d'une part, et d'un porte-moyeu, d'autre part, le support en contact avec la spire d'appui de la portion souple présentant une rampe d'appui hélicoïdale s'étendant depuis une extrémité distale jusqu'à une extrémité proximale agencée longitudinalement au droit de l'extrémité distale, l'extrémité distale étant séparée de l'extrémité proximale par une distance appelée "hauteur de marche", caractérisé en ce que le diamètre terminal de la queue du tronçon fin de fil est inférieur ou égal à la hauteur de marche de la rampe.

Selon une autre caractéristique du dispositif de suspension, le diamètre terminal de la queue est sensiblement égal à la différence entre la hauteur de marche et l'épaisseur de la gaine.

L'invention concerne aussi un procédé de réalisation d'un ressort de suspension réalisé selon les enseignements de l'invention qui comporte :
- une étape de tournage d'un fil d'axe rectiligne de profil constant consistant à réaliser au moins le tronçon intermédiaire et le tronçon fin par tournage du fil ;
- une étape d'enroulement du fil en hélice autour d'un cylindre de révolution,
caractérisé en ce que la queue tronconique du fil est réalisé par tournage lors de la première étape de tournage.

Selon une autre caractéristique du procédé réalisé selon les enseignements de l'invention, à l'issue de l'étape de tournage, le fil présente un axe central rectiligne sur toute sa longueur.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue développée du fil utilisé pour former un ressort de suspension à deux portions de raideurs différentes réalisé selon l'état de la technique ;
[Fig. 2] La figure 2 est une vue du ressort de suspension de l'état de la technique réalisé avec le fil de la figure 1 qui est agencé en appui sur un support, une portion souple du ressort étant totalement comprimée ;
[Fig. 3] La figure 3 est une vue de face qui représente une roue d'un véhicule automobile reliée à une caisse du véhicule automobile par l'intermédiaire d'un ressort de suspension réalisé selon les enseignements de l'invention ;
[Fig. 4] La figure 4 est une vue similaire à celle de la figure 2 qui représente un ressort de suspension réalisé les enseignements de l'invention, une portion souple du ressort étant totalement comprimée ;
[Fig. 5] La figure 5 est une vue développée du fil constituant le ressort de suspension de la figure 4 juste avant son enroulement pour former ledit ressort de suspension ;
[Fig. 6] La figure 6 est une vue similaire à celle de la figure 4 qui représente la portion souple du ressort de suspension lorsqu'elle n'est pas totalement comprimée ;
[Fig. 7] La figure 7 est une vue en coupe selon le plan de couple 7-7 de la figure 6 ;
[Fig. 8] La figure 8 est un schéma-bloc qui représente un procédé de réalisation du ressort de suspension selon les enseignements de l'invention ;
[Fig. 9] La figure 9 est une vue similaire à celle de la figure 4 dans laquelle une spire de la portion souple est recouverte d'une gaine de protection.

### Description détaillée de l'invention

Dans la suite de la description, des éléments présentant des structures identiques ou des fonctions analogues seront désignés par une même référence.

On adoptera par la suite une direction longitudinale "L dirigée selon l'axe d'hélice du ressort de suspension et des directions radiales dirigée orthogonalement à la direction longitudinale depuis l'axe d'hélice vers l'extérieur.

Les termes "section transversale" et "profil" sont utilisés pour désigner une section du fil selon un plan de coupe orthogonal à l'axe "B" principal du fil.

On a représenté à la figure 3 un dispositif 36 de suspension pour un véhicule 38 automobile. Le véhicule 38 automobile comporte une caisse 40 et quatre roues 42 dont une est représentée à la figure 3. La roue 42 est montée à rotation sur un porte-moyeu 44. De manière connue, le porte-moyeu 44 est monté mobile sur la caisse 40 du véhicule par l'intermédiaire d'au moins un bras de suspension (non représenté).

Le porte-moyeu 44 est aussi lié à la caisse 40 du véhicule par l'intermédiaire d'un ressort 10 de suspension similaire à celui qui a été décrit en référence à la figure 2.

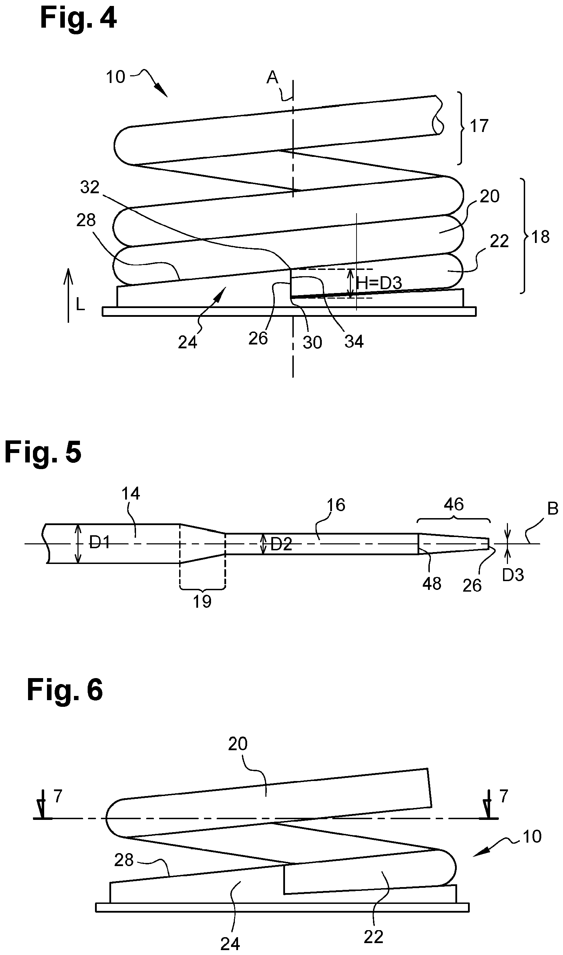

Comme représenté à la figure 4, il s'agit ainsi d'un ressort 10 de suspension réalisé par enroulement en hélice d'un fil 12 autour d'un axe "A" d'hélice. Le fil 12 présente un axe principal "B". Le fil 12 est plus particulièrement conformé en une hélice circulaire. Le terme "hélice circulaire" signifie que toutes les spires sont de mêmes rayons par rapport à l'axe "A" d'hélice. Plus précisément, l'axe "B" du fil 12 présente la forme d'une hélice.

Le ressort 10 de suspension comporte une première portion 17 d'extrémité, dite portion 17 raide, qui présente une première raideur "K1" déterminée. La portion 17 raide comporte plusieurs spires actives, dont une est représentée à la figure 4, qui sont réalisées avec un premier tronçon 14, dit tronçon 14 épais, du fil 12 présentant un profil circulaire d'un premier diamètre "D1" déterminé, comme représenté à la figure 5.

Le ressort 10 de suspension comporte aussi une deuxième portion 18 d'extrémité, dite portion 18 souple, qui présente une deuxième raideur "K2" déterminée inférieure à la première raideur "K1". La portion 18 souple comporte plusieurs spires actives réalisées avec un deuxième tronçon 16, dit tronçon 16 fin, du fil 12 présentant un profil circulaire d'un deuxième diamètre "D2" déterminé inférieur au premier diamètre "D1" déterminé.

Le fil 12 comporte un tronçon 19 intermédiaire entre le tronçon 14 épais et le tronçon 16 fin. Le tronçon 19 intermédiaire présente une forme tronconique faisant varier progressivement le diamètre de la section transversale du fil 12 depuis le premier diamètre "D1" jusqu'au deuxième diamètre "D2".

La portion 18 souple se termine par une spire 22 d'appui, représentée en bas à la figure 4, qui est destinée à être appuyée sur un support 24 associé. La spire active de la portion 18 souple qui est adjacente à la spire 22 d'appui sera appelée par la suite "spire 20 adjacente".

Lorsque le véhicule est dans son état vide, la spire 22 d'appui n'est pas jointive avec la spire 20 adjacente du ressort 10 de suspension, comme cela est représenté à la figure 6. En revanche, lorsque le véhicule est suffisamment chargé, la portion 18 souple du ressort 10 de suspension est totalement comprimée de manière que la spire 20 adjacente soit en contact avec la spire 22 d'appui, comme cela est représenté à la figure 4.

Pour éviter que la couche protectrice du fil 12 ne soit endommagée par le contact entre les spires 20 et 22, la partie de fil 12 formant la spire 20 adjacente est avantageusement revêtue d'une gaine 23 de protection présentant une épaisseur déterminée. La partie de fil formant la spire 22 demeure nue.

En se reportant à nouveau à la figure 3, le ressort 10 de suspension est monté entre deux supports 24 solidaires respectivement de la caisse 40 du véhicule, d'une part, et du porte-moyeu 44, d'autre part. Le ressort 10 de suspension est destiné à travailler en compression.

Comme expliqué en préambule de la description, le support 24 présente la forme d'une rampe 28 hélicoïdale qui s'étend en hélice, coaxialement à l'axe d'hélice du ressort 10 de suspension, depuis une extrémité 30 distale jusqu'à une extrémité 32 proximale agencée longitudinalement au droit de l'extrémité 30 distale. Il est ainsi formé une face d'épaulement longitudinale radiale, appelée par la suite "marche 34", qui s'étend sur une distance longitudinale, dite "hauteur de marche H" déterminée séparant l'extrémité 30 distale de l'extrémité 32 proximale.

L'invention présente une solution pratique et peu onéreuse qui permet d'adapter un ressort 10 de suspension dont le tronçon 16 fin du fil 12 présente un diamètre "D2" qui est supérieur à la hauteur de marche "H" du support 24.

Afin d'éviter les problèmes susceptibles d'être causés par la différence de dimension entre le diamètre du tronçon 16 fin du fil 12 et la hauteur de la marche "H", l'invention propose un ressort 10 de suspension dont la spire 22 d'appui de la portion 18 souple est formée en partie est formée en partie par une queue 46 d'extrémité libre du fil 12 présentant une forme tronconique. La section transversale de la queue 46 présente un diamètre diminuant progressivement depuis une extrémité 48 de jonction avec le tronçon 16 fin, qui présente, en section transversale, un diamètre égal au deuxième diamètre "D2", jusqu'à l'extrémité 26 libre qui présente, en section transversale, un diamètre "D3" terminal inférieur au deuxième diamètre "D2". L'extrémité 26 libre présente plus particulièrement, en section transversale, un diamètre "D3" terminal qui est inférieur ou égal à la hauteur de marche "H" du support 24.

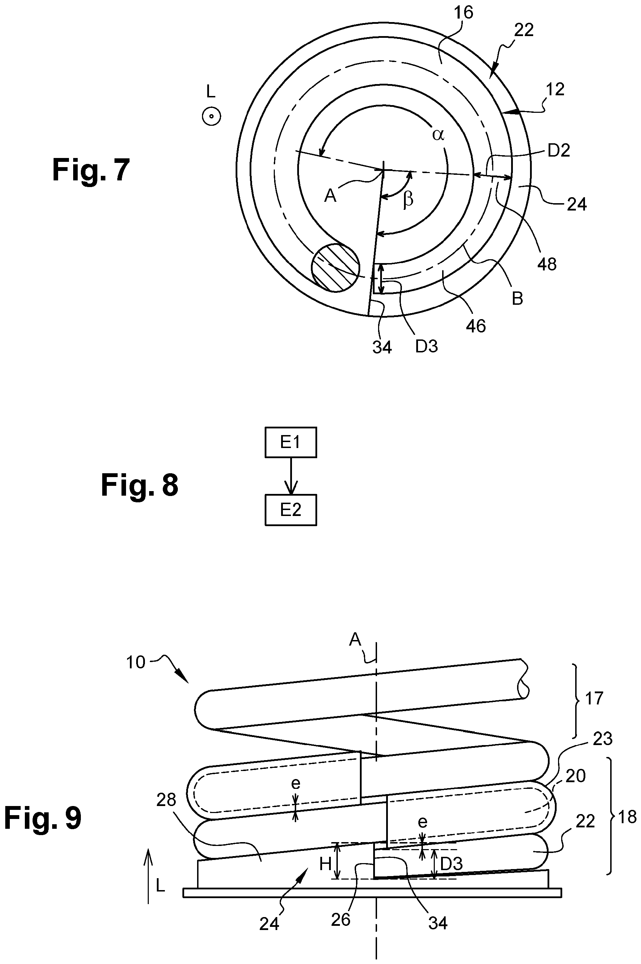

Comme cela est représenté à la figure 9, lorsque la spire 20 adjacente est enveloppée dans un gaine 23, le diamètre D3 terminal de la queue 46 est sensiblement égal à la différence entre la hauteur de marche H et l'épaisseur de la gaine 23. Ainsi, la gaine 23 vient directement en contact avec la spire 22 d'appui lorsque la portion 18 souple est totalement comprimée.

En variante représentée à la figure 4, lorsque la spire 20 adjacente ne comporte pas de gaine, le diamètre D3 terminal de la queue 46 est sensiblement égal à la hauteur de marche H.

La queue 46 présente un axe "B" principal qui est agencé dans le prolongement de l'axe "B" du tronçon 16 fin. Comme cela est représenté à la figure 5, cela signifie qu'en vue développée du fil 12, l'axe de la queue 46 est coaxial à l'axe "B" du tronçon 16 fin du fil 12.

Les propriétés élastiques de la portion 18 souple du ressort 10 de suspension, et notamment sa raideur "K2", sont principalement conférées par ses spires actives. Comme cela est représenté à la figure 7, seule une partie de la spire 22 d'appui influe sur la raideur "K2". Une partie d'extrémité libre du fil 12 s'étendant sur un secteur angulaire déterminé, dit secteur angulaire inactif "α", de la spire 22 d'appui autour de l'axe "A" d'hélice a uniquement pour fonction de servir d'appui au ressort 10 de suspension sans avoir d'influence sur sa raideur "K2". Le secteur angulaire inactif "α" de la spire 22 d'appui est par exemple d'environ 270° en partant de l'extrémité 26 libre du fil 12.

Etant donné que les dimensions en section transversale du fil 12 influent sur la raideur locale du ressort 10 de suspension, la queue 46 du fil 12 s'étend avantageusement sur un secteur angulaire "β" inférieur au secteur angulaire inactif "α". Ainsi, la queue 46 tronconique s'étend sur un secteur angulaire "β" inférieur à 270°, par compris entre 90° et 180° autour de l'axe "A" d'hélice.

Comme cela est représenté très schématiquement à la figure 8, le procédé de réalisation du ressort 10 de suspension comporte principalement une étape "E1" de tournage du fil 12 suivie d'une étape "E2" d'enroulement du fil 12 en hélice autour d'un cylindre de révolution dont l'axe coïncide avec l'axe "A" d'hélice.

Au début de la première étape "E1" de tournage, le fil 12 présente un axe "B" soit rectiligne et son profil présente un diamètre constant sur toute sa longueur. Le diamètre du fil 12 au début de l'opération de tournage est par exemple égal au premier diamètre "D1" du tronçon 14 épais.

Le fil 12 est ainsi positionné sur un tour de manière à tourner autour de son axe "B". Un outil de coupe (non représenté) permet ensuite d'enlever de la matière au fil 12 pour réaliser le tronçon 19 intermédiaire et le tronçon 16 fin.

La queue 46 tronconique du fil 12 est réalisée par tournage lors de cette première étape "E1" de tournage. La queue 46 est par exemple réalisé au début de l'étape "E1" de tournage, par enlèvement de matière sur la partie correspondante du tronçon 16 fin.

En variante, par exemple lorsque le tournage est réalisé en plusieurs passes, la queue est réalisée à la fin de l'étape de tournage.

A l'issue de l'étape "E1" de tournage, le fil 12 présente toujours un axe "B" central rectiligne sur toute sa longueur.

Le fil 12 ainsi usiné est ensuite conformé en ressort 10 de suspension lors de la deuxième étape "E2" d'enroulement.

Après l'étape "E1", il est avantageusement prévu des opérations d'application d'une couche de protection sur le fil 12, ainsi qu'éventuellement le gainage de la spire 20 au moyen de la gaine 23.

L'invention permet avantageusement d'utiliser un même modèle de support 24 qui est commun à des ressorts 10 de suspension présentant des diamètres différents. Par exemple, lorsque le diamètre du tronçon 16 fin du fil 12 est susceptible de varier d'un modèle de véhicule à l'autre dans un intervalle déterminé, la hauteur de marche "H" du support 24 est conçue pour être égale au diamètre formant la borne inférieure dudit intervalle. Lorsqu'un ressort 10 de suspension présente un diamètre "D2" de tronçon 16 fin supérieur à cette hauteur de marche "H", il est aisé de modifier la forme de sa queue 46 pour pouvoir l'adapter audit support 24.

Cette opération de modification de la forme du ressort 10 de suspension s'inscrit dans un procédé de réalisation déjà utilisé pour former le tronçon 16 fin du ressort 10 de suspension réalisé selon l'état de la technique. Il est donc beaucoup moins onéreux de modifier la forme de la queue 46 du fil 12 par tournage que de devoir produire et gérer plusieurs modèles de supports 24.

En outre, l'invention permet d'adapter la forme du fil 12 formant le ressort 10 de suspension au support 24 sans que cela ne modifie sensiblement les propriétés, et notamment la raideur, de la portion 18 souple du ressort 10 de suspension.

## Revendications

1. Ressort (10) de suspension pour un dispositif de suspension de véhicule automobile réalisé par enroulement en hélice d'un fil (12) autour d'un axe (A) d'hélice, le ressort (10) de suspension comportant :
- une première portion d'extrémité, dite portion (17) raide, qui présente une première raideur (K1) déterminée, et qui comporte plusieurs spires actives réalisées avec un premier tronçon, dit tronçon (14) épais, du fil (12) présentant un premier diamètre (D1) déterminé ; et
- une deuxième portion d'extrémité, dite portion (18) souple, qui présente une deuxième raideur (K2) déterminée inférieure à la première raideur (K1), et qui comporte plusieurs spires actives réalisées avec un deuxième tronçon, dit tronçon (16) fin, du fil (12) présentant un deuxième diamètre (D2) déterminé inférieur au premier diamètre (D1) déterminé, la portion (18) souple se terminant par une spire (22) d'appui destinée à être appuyée sur un support (24) ;
**caractérisé en ce que** la spire (22) d'appui de la portion (18) souple est formée en partie par une queue (46) d'extrémité libre du fil (12) présentant une forme tronconique dont le diamètre en section transversal diminue progressivement jusqu'à une extrémité (26) libre présentant un diamètre (D3) terminal inférieur au deuxième diamètre (D2).

2. Ressort (10) de suspension selon la revendication précédente, **caractérisé en ce que** la queue (46) présente un axe (B) principal qui est agencé dans le prolongement de l'axe (B) du tronçon (16) fin.

3. Ressort (10) de suspension selon l'une quelconque des revendications précédentes, **caractérisé en ce que** la queue (46) tronconique s'étend sur un secteur angulaire (β) inférieur à 270° autour de l'axe (A) d'hélice.

4. Ressort (10) de suspension selon la revendication précédente, **caractérisé en ce que** la queue (46) tronconique s'étend sur un secteur angulaire (β) compris entre 90° et 180° autour de l'axe (A) d'hélice.

5. Ressort (10) de suspension selon l'une quelconque des revendications précédentes, **caractérisé en ce que** le fil (12) comporte un tronçon (19) intermédiaire entre le tronçon (14) épais et le tronçon (16) fin, le tronçon (19) intermédiaire présentant une forme tronconique faisant varier progressivement le diamètre de la section transversale entre le premier diamètre (D1) et le deuxième diamètre (D2).

6. Ressort (10) de suspension selon l'une quelconque des revendications précédentes, **caractérisé en ce que**, au repos, la spire (22) d'appui de la portion (18) souple n'est pas jointive avec la spire (20) adjacente.

7. Ressort (10) de suspension selon l'une quelconque des revendications précédentes, **caractérisé en ce que** la partie de fil (12) formant la spire (20) adjacente est revêtue d'une gaine de protection d'une épaisseur déterminée.

8. Dispositif (36) de suspension pour un véhicule automobile comportant un ressort (10) de suspension réalisé selon l'une quelconque des revendications précédentes, qui est monté entre deux supports (24) solidaires respectivement d'une caisse (40) du véhicule, d'une part, et d'un porte-moyeu (44), d'autre part, le support (24) en contact avec la spire (22) d'appui de la portion (18) souple présentant une rampe (28) d'appui hélicoïdale s'étendant depuis une extrémité (30) distale jusqu'à une extrémité (32) proximale agencée longitudinalement au droit de l'extrémité (30) distale, l'extrémité (30) distale étant séparée de l'extrémité proximale par une distance appelée "hauteur de marche (H)",
**caractérisé en ce que** le diamètre (D3) terminal de la queue (46) du tronçon (16) fin de fil (12) est inférieur ou égal à la hauteur de marche (H) de la rampe (28).

9. Dispositif (36) de suspension selon la revendication précédente prise en combinaison avec la revendication 7, **caractérisé en ce que** le diamètre (D3) terminal de la queue (46) est sensiblement égal à la différence entre la hauteur de marche (H) et l'épaisseur de la gaine.

10. Procédé de réalisation d'un ressort (10) de suspension selon l'une quelconque des revendications 1 à 7, comportant :
- une étape (E1) de tournage d'un fil (12) d'axe (B) rectiligne de profil constant consistant à réaliser au moins le tronçon (19) intermédiaire et le tronçon (16) fin par tournage du fil (12) ;
- une étape (E2) d'enroulement du fil (12) en hélice autour d'un cylindre de révolution,
**caractérisé en ce que** la queue (46) tronconique du fil (12) est réalisé par tournage lors de la première étape (E1) de tournage.

11. Procédé selon la revendication précédente, **caractérisé en ce qu'**à l'issue de l'étape (E1) de tournage, le fil (12) présente un axe (B) central rectiligne sur toute sa longueur.

## Patentansprüche

1. Tragfeder (10) für eine Aufhängungsvorrichtung eines Kraftfahrzeugs, die durch schraubenlinienförmiges Wickeln eines Drahtes (12) um eine Helixachse (A) hergestellt ist, wobei die Tragfeder (10) umfasst:
- einen ersten Endabschnitt, steifer Endabschnitt (17) genannt, der eine bestimmte erste Steifigkeit (K1) aufweist und der mehrere aktive Windungen umfasst, die mit einem ersten Teilstück, dickes Teilstück (14) genannt, des Drahtes (12) hergestellt sind, das einen bestimmten ersten Durchmesser (D1) aufweist; und
- einen zweiten Endabschnitt, flexibler Endabschnitt (18) genannt, der eine bestimmte zweite Steifigkeit (K2) aufweist, die geringer als die erste Steifigkeit (K1) ist, und der mehrere aktive Windungen umfasst, die mit einem zweiten Teilstück, dünnes Teilstück (16) genannt, des Drahtes (12) hergestellt sind, das einen bestimmten zweiten Durchmesser (D2) aufweist, der kleiner als der bestimmte erste Durchmesser (D1) ist, wobei der flexible Abschnitt (18) in einer Stützwindung (22) endet, die dazu bestimmt ist, auf einem Träger (24) abgestützt zu werden; **dadurch gekennzeichnet, dass** die Stützwindung (22) des flexiblen Abschnitts (18) zum Teil von einem freien Endstück (46) des Drahtes (12) gebildet wird, das eine Kegelstumpfform aufweist, deren Durchmesser im Querschnitt allmählich abnimmt, bis zu einem freien Ende (26), das einen Enddurchmesser (D3) aufweist, der kleiner als der zweite Durchmesser (D2) ist.

2. Tragfeder (10) nach dem vorhergehenden Anspruch, **dadurch gekennzeichnet, dass** das Endstück (46) eine Hauptachse (B) aufweist, die in der Verlängerung der Achse (B) des dünnen Teilstücks (16) angeordnet ist.

3. Tragfeder (10) nach einem der vorhergehenden Ansprüche, **dadurch gekennzeichnet, dass** sich das kegelstumpfförmige Endstück (46) über einen Winkelsektor (β) um die Helixachse (A) erstreckt, der kleiner als 270° ist.

4. Tragfeder (10) nach dem vorhergehenden Anspruch, **dadurch gekennzeichnet, dass** sich das kegelstumpfförmige Endstück (46) über einen Winkelsektor (β) um die Helixachse (A) erstreckt, der zwischen 90° und 180° beträgt.

5. Tragfeder (10) nach einem der vorhergehenden Ansprüche, **dadurch gekennzeichnet, dass** der Draht (12) ein Zwischenteilstück (19) zwischen dem dicken Teilstück (14) und dem dünnen Teilstück (16) umfasst, wobei das Zwischenteilstück (19) eine Kegelstumpfform aufweist, die bewirkt, dass sich der Durchmesser des Querschnitts allmählich zwischen dem ersten Durchmesser (D1) und dem zweiten Durchmesser (D2) ändert.

6. Tragfeder (10) nach einem der vorhergehenden Ansprüche, **dadurch gekennzeichnet, dass** im Ruhezustand die Stützwindung (22) des flexiblen Abschnitts (18) nicht an der benachbarten Windung (20) anliegt.

7. Tragfeder (10) nach einem der vorhergehenden Ansprüche, **dadurch gekennzeichnet, dass** der Teil des Drahtes (12), der die benachbarte Windung (20) bildet, mit einer Schutzhülle mit einer bestimmten Dicke überzogen ist.

8. Aufhängungsvorrichtung (36) für ein Kraftfahrzeug, welche eine gemäß einem der vorhergehenden Ansprüche ausgebildete Tragfeder (10) umfasst, die zwischen zwei Trägern (24) angebracht ist, die mit einer Karosserie (40 des Fahrzeugs einerseits bzw. einem Nabenträger (44) andererseits fest verbunden sind, wobei der Träger (24), der sich in Kontakt mit der Stützwindung (22) des flexiblen Abschnitts (18) befindet, eine schraubenlinienförmige Stützrampe (28) aufweist, die sich von einem distalen Ende (30) bis zu einem proximalen Ende (32) erstreckt, das in Längsrichtung gegenüber dem distalen Ende (30) angeordnet ist, wobei das distale Ende (30) von dem proximalen Ende durch einen "Stufenhöhe (H)" genannten Abstand getrennt ist,
**dadurch gekennzeichnet, dass** der Enddurchmesser (D3) des Endstücks (46) des dünnen Teilstücks (16) des Drahtes (12) kleiner oder gleich der Stufenhöhe (H) der Rampe (28) ist.

9. Aufhängungsvorrichtung (36) nach dem vorhergehenden Anspruch in Kombination mit Anspruch 7, **dadurch gekennzeichnet, dass** der Enddurchmesser (D3) des Endstücks (46) im Wesentlichen gleich der Differenz zwischen der Stufenhöhe (H) und der Dicke der Hülle ist.

10. Verfahren zur Herstellung einer Tragfeder (10) nach einem der Ansprüche 1 bis 7, umfassend:
- ueinen Schritt (E1) des Drehens eines Drahtes (12) mit einer geraden Achse (B) und konstantem Profil, der darin besteht, mindestens das Zwischenteilstück (19) und das dünne Teilstück (16) durch Drehen des Drahtes (12) herzustellen;
- einen Schritt (E2) des schraubenlinienförmigen Wickelns des Drahtes (12) um einen Rotationszylinder, **dadurch gekennzeichnet, dass** das kegelstumpfförmige Endstück (46) des Drahtes (12) durch Drehen im ersten Schritt (E1) des Drehens hergestellt wird.

11. Verfahren nach dem vorhergehenden Anspruch, **dadurch gekennzeichnet, dass** am Ende des Schrittes (E1) des Drehens der Draht (12) auf seiner gesamten Länge eine gerade Mittelachse (B) aufweist.

## Claims

1. Suspension spring (10) for a motor vehicle suspension device that is produced by helically winding a wire (12) around a helix axis (A), the suspension spring (10) comprising:
- a first end portion, termed stiff portion (17), which has a first predetermined stiffness (K1), and which comprises a plurality of active turns produced with a first section, termed thick section (14), of the wire (12) that has a first predetermined diameter (D1); and
- a second end portion, termed flexible portion (18), which has a second predetermined stiffness (K2) which is less than the first stiffness (K1), and which comprises a plurality of active turns produced with a second section, termed thin section (16), of the wire (12) that has a second predetermined diameter (D2) which is less than the first predetermined diameter (D1), the flexible portion (18) terminating in a bearing turn (22) intended to bear on a support (24);
**characterized in that** the bearing turn (22) of the flexible portion (18) is formed in part by a free end tail (46) of the wire (12) that has a frustoconical shape whose diameter in cross section decreases progressively up to a free end (26) having a terminal diameter (D3) which is less than the second diameter (D2).

2. Suspension spring (10) according to the preceding claim, **characterized in that** the tail (46) has a main axis (B) which is arranged in the continuation of the axis (B) of the thin section (16).

3. Suspension spring (10) according to either one of the preceding claims, **characterized in that** the frustoconical tail (46) extends over an angular sector (β) of less than 270° around the helix axis (A).

4. Suspension spring (10) according to the preceding claim, **characterized in that** the frustoconical tail (46) extends over an angular sector (β) of between 90° and 180° around the helix axis (A).

5. Suspension spring (10) according to any one of the preceding claims, **characterized in that** the wire (12) comprises an intermediate section (19) between the thick section (14) and the thin section (16), the intermediate section (19) having a frustoconical shape that causes the diameter of the cross section to vary progressively between the first diameter (D1) and the second diameter (D2) .

6. Suspension spring (10) according to any one of the preceding claims, **characterized in that**, at rest, the bearing turn (22) of the flexible portion (18) is not contiguous with the adjacent turn (20).

7. Suspension spring (10) according to any one of the preceding claims, **characterized in that** the part of the wire (12) forming the adjacent turn (20) is covered with a protective sheath having a predetermined thickness.

8. Suspension device (36) for a motor vehicle that comprises a suspension spring (10) produced according to any one of the preceding claims, which is mounted between two supports (24) respectively secured to a body (40) of the vehicle, on the one hand, and to a hub carrier (44), on the other hand, the support (24) in contact with the bearing turn (22) of the flexible portion (18) having a helical bearing ramp (28) that extends from a distal end (30) up to a proximal end (32) arranged longitudinally in line with the distal end (30), the distal end (30) being separated from the proximal end by a distance referred to as "step height (H)",
**characterized in that** the terminal diameter (D3) of the tail (46) of the thin section (16) of wire (12) is less than or equal to the step height (H) of the ramp (28).

9. Suspension device (36) according to the preceding claim taken in combination with Claim 7, **characterized in that** the terminal diameter (D3) of the tail (46) is substantially equal to the difference between the step height (H) and the thickness of the sheath.

10. Method for producing a suspension spring (10) according to any one of Claims 1 to 7, comprising:
- a step (E1) of turning a constant-profile wire (12) having a rectilinear axis (B) that consists in producing at least the intermediate section (19) and the thin section (16) by turning the wire (12);
- a step (E2) of helically winding the wire (12) around a cylinder of revolution,
**characterized in that** the frustoconical tail (46) of the wire (12) is produced by turning during the first turning step (E1).

11. Method according to the preceding claim, **characterized in that**, at the end of the turning step (E1), the wire (12) has a rectilinear central axis (B) over its entire length.
